# EUROPÄISCHE PATENTSCHRIFT

(11) **EP 1 007 857 B1**
(45) Veröffentlichungstag und Bekanntmachung des Hinweises auf die Patenterteilung: **28.11.2001**
(21) Anmeldenummer: 98929415.2
(22) Anmeldetag: 03.06.1998
(51) Int. Cl.: F16B 5/02, F16B 37/14

(54) **VERSCHRAUBUNGSKOPF**
SCREWING HEAD
TETE DE VISSAGE

(30) Priorität: 09.06.1997 DE 19724242
(43) Veröffentlichungstag der Anmeldung: 14.06.2000
(73) Patentinhaber: Nedschroef Plettenberg, 58840 Plettenberg (DE)
(72) Erfinder: ULRIKKEHOLM, Torben, DK-550 Lageskou (DK)
(74) Vertreter: Alber, Norbert, Dipl.-Ing.
(86) Internationale Anmeldenummer: EP9803305
(87) Internationale Veröffentlichungsnummer: WO9857069

(56) Entgegenhaltungen:
- DE-A- 3 919 013
- FR-A- 2 530 747
- FR-A- 2 694 608

## Beschreibung

### I. Anwendungsgebiet

Die Erfindung betrifft einen Verschraubungskopf, also die Mutter oder die Schraube, insbesondere den Schraubenkopf, einer Schraubverbindung.

### II. Technischer Hintergrund

Bei manchen Verschraubungen liegen die Muttern bzw. der Schraubenkopf nicht direkt an den miteinander zu verbindenden Bauteilen an, sondern es sind bewußt Distanzteile dazwischen angeordnet, wie etwa gemäß FR-A-2 694 608, was aus unterschiedlichen Gründen geschehen kann:

Dies kann der Fall sein, um die Verschraubung auf der einen Seite nicht zu weit vorstehen zu lassen, dies kann geschehen, da die Verschraubung an einer tiefliegenden Stelle und damit schwer zugänglich angeordnet werden soll, der Verschraubungskopf jedoch gut zugänglich sein soll, der Verschraubungskopf jedoch gut zugänglich sein soll, und dies kann nicht zuletzt auch deswegen geschehen, um das Distanzteil beispielsweise zum Aufbringen einer Vorspannkraft, basierend auf den elastischen Eigenschaften des Distanzteiles, zu benutzen.

Ein weiterer Anwendungsfall solcher Distanzteile sind sogenannte Zuganker, also Verschraubungen, bei denen die Elastizität des Schraubenschaftes in Längsrichtung zum Aufbringen einer Vorspannkraft auf die Bauteile benutzt werden. Wenn die Bauteile jedoch nur eine geringe axiale Erstreckung der Verschraubung erfordern würden, wird mittels eines Distanzstückes der Schraubenschaft so lang gewählt. daß dessen Vorspannung, die mit der Länge wächst, ausreichend ist.

Bei derartigen Distanzhülsen, durch welche sich der Schraubenschaft hindurcherstrecken muß. ist es grundsätzlich nachteilig, daß die Distanzhülse ein separates Bauteil darstellt, vor allem wenn bei Montage von Serienteilen die Montage möglichst schnell und einfach vonstatten gehen soll.

### III. Darstellung der Erfindung

### a) Technische Aufgabe

Es besteht daher die Aufgabe, eine Verschraubung unter Mitverwendung einer Distanzhülse möglichst einfach durchführen zu können.

### b) Lösung der Aufgabe

Diese Aufgabe wird durch den Verschraubungskopf gemäß Anspruch 1 gelöst. Vorteilhafte Ausführungsformen ergeben sich aus den Unteransprüchen.

Dadurch, daß die Distanzhülse zwar drehbar. aber dennoch unverlierbar, also in Axialrichtung im wesentlichen fest, an dem Verschraubungskopf (Mutter oder Schraubenkopf) angeordnet ist, ist eine gemeinsame Handhabung möglich. Es ist also wie bei Anbringen einer normalen Verschraubung möglich, den Verschraubungskopf mit der einen Hand zu halten und mit der anderen Hand ein Werkzeug anzusetzen, das Gegenstück der Verschraubung einzuführen etc.

Die unverlierbare Anordnung des Distanzteils am Verschraubungskopf hat jedoch noch weitere Vorteile, da auch die Fluchtung der Distanzhülse zum Verschraubungskopf vorgegeben werden kann:

In der Regel wird die Distanzhülse mit der Längsachse des Verschraubungskopfes fluchten. Dies führt dazu. daß z. B. bei einer an einer Mutter entsprechend angeordneten Distanzhülse die Schraube lediglich in die freie stirnseitige Öffnung der Distanzhülse eingeführt werden muß. und von dort beim Weiterschieben automatisch zum Gewinde der Mutter hingeführt wird, sofern beim Übergang zwischen Distanzteil und Mutter die Durchgangsöffnungen fluchten und die Durchgangsöffnung der Distanzhülse nicht wesentlich größer ist als die der Mutter.

Dies kann beispielsweise dazu benutzt werden, die Durchgangsöffnung der Distanzhülse konisch auszubilden mit Verjüngung zur tragenden Mutter hin, so daß ein leichtes Einführen der Schraube in die weite Öffnung des Distanzteiles möglich ist und automatisch ein Hinführen zum Gewinde der Mutter erfolgt.

Ebenso kann das Distanzteil zum Vergrößern der stirnseitigen Anlagefläche gegenüber dem Bauteil dienen und damit der rechtwinkligen Positionierung der Verschraubung zum Bauteil.

Weiterhin bietet die frei drehbare Verbindung zwischen Distanzhülse und Verschraubungskopf den Vorteil, daß beim Festziehen der Verschraubung die Distanzhülse nicht mitdrehen muß. und damit die Oberfläche des Bauteiles, z. B. der dort aufgebrachte Lack, nicht beschädigt wird.

Weiterhin kann die Distanzhülse in axialer Richtung und/oder auch in radialer Richtung aufgrund des verwendeten Materials. z. B. Kunststoff, so elastisch sein, daß die Elastizität der Distanzhülse ausreicht, um eine ausreichende Vorspannung der Verschraubung sicherzustellen, und damit auch bei dynamischer Belastung ein unbeabsichtigtes Lösen der Verschraubung zu vermeiden.

### c) Ausführungsbeispiele

Eine Ausführungsform gemäß der Erfindung ist im folgenden anhand der Figuren beispielhaft näher beschrieben. Es zeigen:
- Fig. 1:: eine teilgeschnittene Seitenansicht des erfindungsgemäßen Verschraubungskopfes.
- Fig. 2 und 3:: Anwendungsbeispiele für diese Verschraubung,
- Fig. 4:: eine teilgeschnittene Seitenansicht mit einer konischen Distanzhülse, und
- Fig. 5:: eine an einem Schraubenkopf angeordnete Distanzhülse.

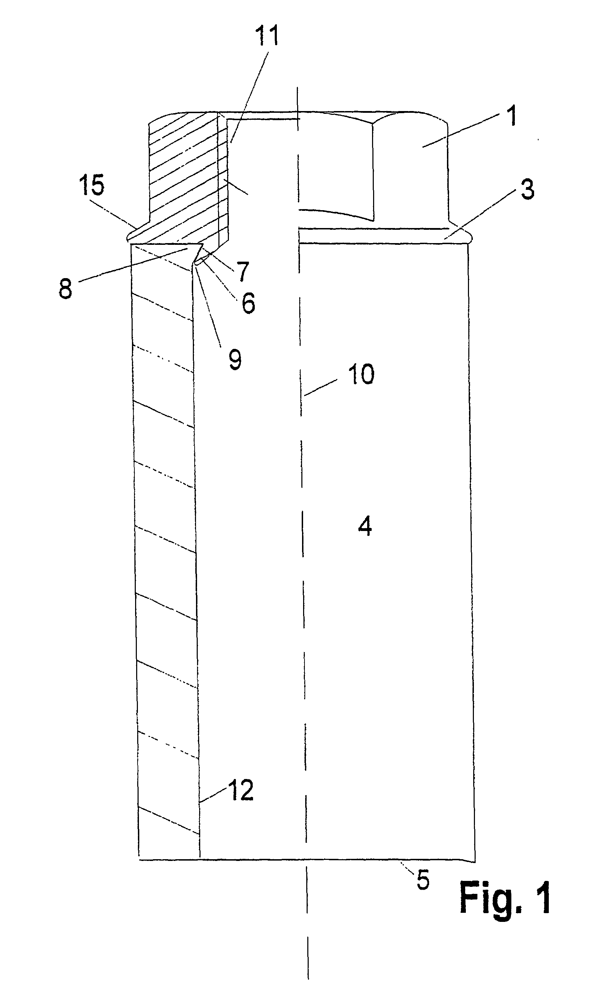

Fig. 1 zeigt eine Mutter 1, die gemäß der Erfindung mit einem Distanzteil 4 verbunden ist.

Die Mutter 1 weist einen üblichen Sechskantkopf auf, sowie einen demgegenüber von der Grundfläche her größeren stirnseitigen Flansch 15 zur Anlage an einem angrenzenden Teil. An dieser Stirnseite ist das hülsenförmige Distanzteil 4 angeordnet, welches eine Durchgangsöffnung 12 aufweist, welche in Fig. 1 mit der Durchgangsöffnung 11 der Mutter, die ein Innengewinde 14 aufweist. fluchtet, jedoch größer als diese ausgebildet ist.

Das Distanzteil 4 kann vom Innenquerschnitt ebenso wie vom äußeren Querschnitt rund oder vieleckig ausgebildet sein.

Die unverlierbare, jedoch drehfeste Verbindung zwischen der Mutter 1 und dem Distanzteil 4 geschieht über eine ringförmige, formschlüssige Verbindung.

Zu diesem Zweck weist an der gegen das Distanzteil 4 weisenden Stirnfläche die Mutter 1 eine axial vorstehende und schräg radial nach außen stehende Nase 6 auf, die vorzugsweise ringförmig umläuft und dadurch einen nach radial schräg außen weisenden, ringförmigen Hinterschnitt 7 bildet.

In diesen Hinterschnitt 7 greift radial von schräg außen her eine entsprechende Nase 8 des Distanzteiles 4 ein. welche radial nach innen vorsteht, so daß das Distanzteil 4 in dem ringförmigen Hinterschnitt 7 der Mutter 1 drehbar ist. von der Mutter 1 jedoch nicht axial abgezogen werden kann.

Vorzugsweise entsteht die formschlüssige Verbindung dadurch, daß die ringförmig schräg nach außen ragende Nase 6 der meist aus Metall bestehenden Mutter 1 erst nach dem Ansetzen des Distanzteiles von einer axialen Erstreckung aus nach außen umgebördelt wird mittels eines Roll- oder Stauchvorganges.

Eine derartige formschlüssige, ringförmige Verbindung bedeutet nicht unbedingt, daß die entsprechenden Nasen 6 bzw 8 durchgängig ringförmig umlaufen. Auch Unterbrechungen entlang des Umfanges sind möglich, müssen jedoch so dimensioniert sein, daß in keiner Position eine Trennung von Mutter 1 und Distanzteil 4 möglich ist.

Die entsprechende formschlüssige Verbindung kann statt am Innenumfang der entsprechenden Stirnfläche auch am Außenumfang angeordnet sein.

In Fig. 1 besitzt das hülsenförmige Distanzteil 4 eine über die gesamte Axialerstreckung im wesentlichen gleichbleibende Wandstärke sowie - bis auf die Verbindungsstelle zur Mutter 1 - gleichbleibend im Innen- und Außenquerschnitt, der vorzugsweise ein runder Querschnitt ist.

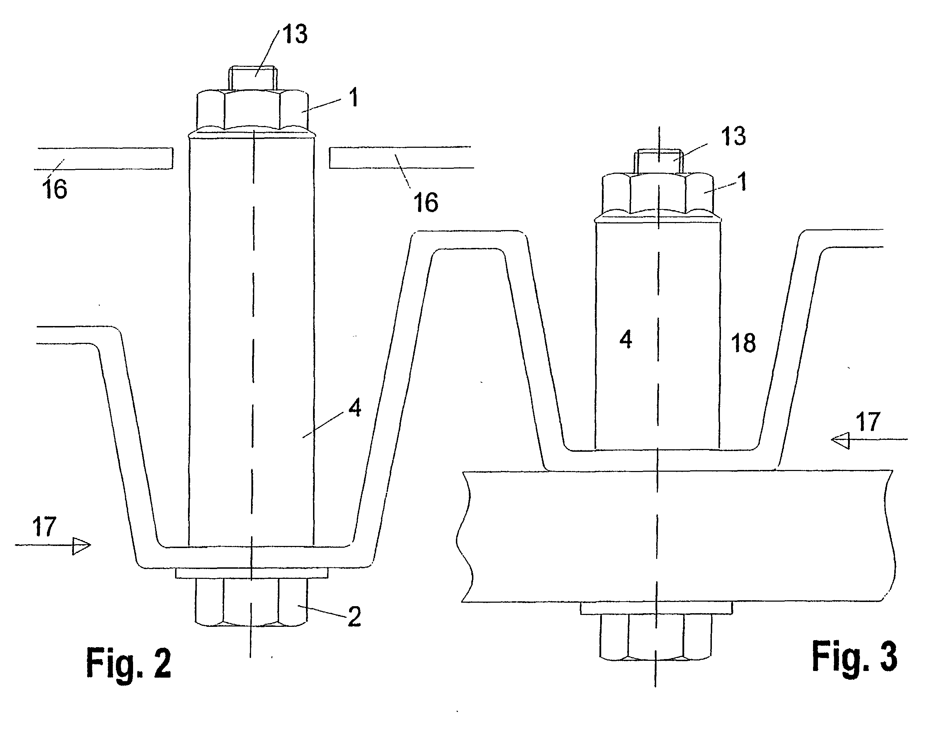

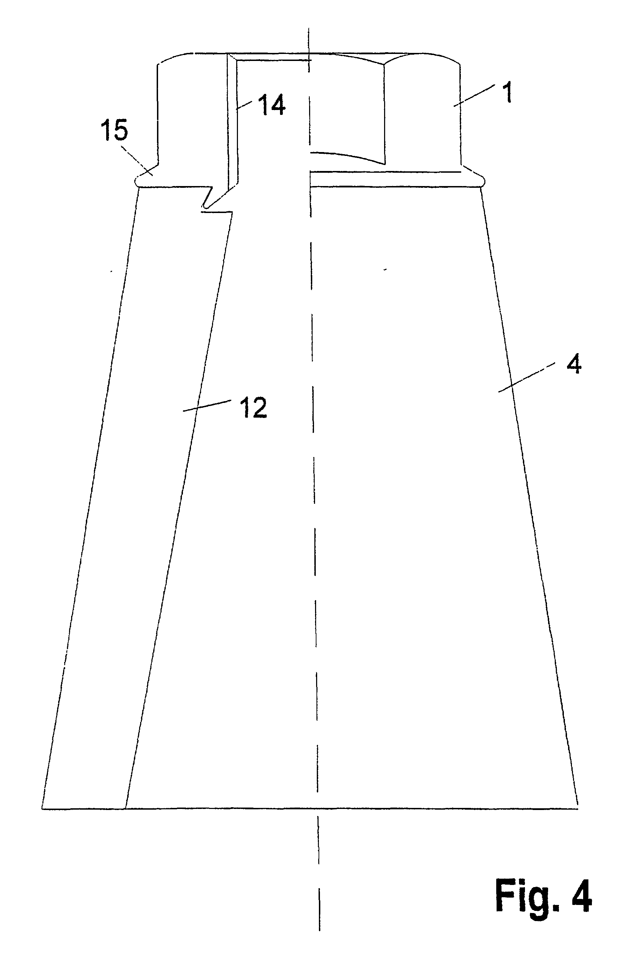

Der in Fig. 1 dargestellte Verschraubungskopf, bestehend aus einer Mutter 1 und daran befestigtem Distanzteil 4, ist in den Figuren 2 und 3 in der Anwendung dargestellt.

Die mit einem solchen Verschraubungskopf hergestellte Schraubverbindung kann beispielsweise an einer schwer zugänglichen Stelle, gemäß Fig. 2 beispielsweise hinter einer eng abschottenden Wand 16, angeordnet werden.

Um die erfindungsgemäße Mutter 1 vor diese abschottende Wand 16 zu bringen, wird die Mutter 1 mit dem Distanzteil 4 auf die Verschraubungsstelle 17 aufgesetzt, so daß mit einem Werkzeug etc. die Mutter 1 nunmehr vor der abschottenden Wand 16 liegt, und damit gut zugänglich ist. Ohne das Distanzteil wäre die Montage der Verschraubung kaum möglich.

Fig. 3 zeigt auch ohne die abschottende Wand 16 den Vorteil, an schwer zugänglichen Verschraubungsstellen 17. beispielsweise in einer Vertiefung 18, die Verschraubung leicht herstellen zu können, indem mittels des Distanzteiles 4 der Verschraubungskopf 1 außerhalb dieser Vertiefung 18 liegt und jederzeit gut zugänglich und einsehbar bleibt.

Bei einem entsprechend elastischen Distanzteil 4 wird aufgrund der dann gegebenen langen axialen Erstreckung des Schraubenschaftes 13 auch eine ausreichende Vorspannkraft auf diese Verschraubung ausgeübt.

Gegenüber der Lösung in Fig. 1 mit einem im wesentlichen zylindrischen. rohrförmigen Distanzteil 4 zeigt Fig. 4 ein konisches Distanzteil 4, während die Mutter 1 einschließlich der Verbindung zwischen Mutter 1 und Distanzteil 4 derjenigen in Fig. 1 entspricht.

Das Distanzteil 4 ist einerseits außen konisch erweitert, mit der schmalsten Stelle an der Mutter 1, und auch die Durchgangsöffnung 12 erweitert sich analog, so daß eine gleichbleibende Wandstärke gegeben ist.

In beiden Fällen ist der kleinere Durchmesser auf der Seite der Mutter 1 gegeben, wobei der Außendurchmesser an der Mutter in etwa den Durchmesser des Flansches 15 der Mutter 1 entspricht.

Durch die Konizität des Außenumfangs des Distanzteils 4 wird die Anlagefläche bzw. der anliegende Durchmesser gegenüber dem zu verschraubenden Bauteil, welches in Fig. 4 nicht dargestellt ist, vergrößert. Dadurch wird die Abstützung besser. und bei unebener Oberfläche des zu verschraubenden Bauteiles wird das ungünstige Schrägstehen, und nicht rechtwinklige Anordnen der Verschraubung vermindert bzw. ganz vermieden.

Durch die konische Gestaltung des Innenumfanges des Distanzteiles wird ein Hinführen, quasi ein Zentrieren, der Schraube beim Anbringen der Verschraubung zur Mutter 1 und zu deren Innengewinde 14 hin erreicht. ohne dieses Innengewinde mit dem freien Ende der Schraube "ertasten" zu müssen.

Zu diesem Zweck ist es vorteilhaft. wie in Fig. 4 dargestellt. den Innenumfang 12 so zu wählen, daß an dem der Mutter I zugewandten stirnseitigen Ende der Innendurchmesser 12 nur unwesentlich größer ist als der Innenumfang des Innengewindes 14 der Mutter 1, und damit eine einmal in das Distanzteil 4 eingeführte Schraube unweigerlich in das Innengewinde 14 der Mutter 1 hineingeführt wird.

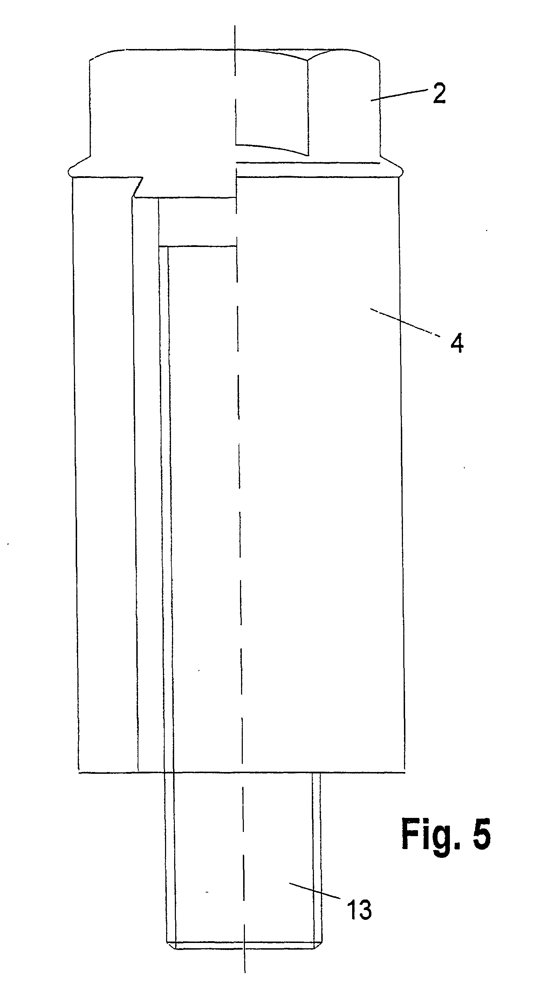

In Fig. 5 ist das Distanzteil 4 statt an einer Mutter 1 als Verschraubungskopf am Schraubenkopf 2 einer Schraube angeordnet. Ansonsten ist die Gestaltung und auch die Verbindung zum Schraubenkopf 2 die gleiche wie in Fig. 1 gegenüber der Mutter 1. Der Schraubenschaft 13 muß in Relation zum Distanzteil 4 eine um soviel größere axiale Erstreckung aufweisen. daß die gewünschten Bauteile unter Berücksichtigung deren Dicke miteinander verschraubt werden können.

## Patentansprüche

1. Verschraubungskopf (Mutter (1) oder Schraubenkopf (2)),
**dadurch gekennzeichnet, daß**
sich an der verschraubungsseitigen Stirnfläche (3) ein rohrförmiges Distanzteil (4) drehbar, jedoch unverlierbar, angeordnet ist.

2. Verschraubungskopf nach Anspruch 1.
**dadurch gekennzeichnet, daß**
die axiale Erstreckung des Distanzteiles (4) größer ist als die axiale Erstreckung des Verschraubungskopfes (Mutter (1) oder Schraubenkopf (2)).

3. Verschraubungskopf nach einem der vorhergehenden Ansprüche.
**dadurch gekennzeichnet. daß**
die axiale Erstreckung des Distanzteiles (4) mindestens das Dreifache der axialen Erstreckung des Verschraubungskopfes beträgt.

4. Verschraubungskopf nach einem der vorhergehenden Ansprüche,
**dadurch gekennzeichnet, daß**
das Distanzteil (4) in Längsrichtung (10) elastisch ausgebildet ist.

5. Verschraubungskopf nach Anspruch 4,
**dadurch gekennzeichnet, daß**
das Distanzteil (4) in Längsrichtung (10) wesentlich bzw. ausschließlich in der Längsrichtung (10) elastisch ausgebildet ist.

6. Verschraubungskopf nach Anspruch 4 oder 5,
**dadurch gekennzeichnet. daß**
das Distanzteil (4) aus Kunststoff besteht.

7. Verschraubungskopf nach Anspruch 4,
**dadurch gekennzeichnet, daß**
die bauteilseitige Stirnfläche (5) des Distanzteiles (4) größer ist als die verschraubungsseitige Stirnfläche des Distanzteiles (4).

8. Verschraubungskopf nach Anspruch 4.
**dadurch gekennzeichnet, daß**
die bauteilseitige Stirnfläche (5) des Distanzteiles (4) kleiner ist als die verschraubungsseitige Stirnfläche des Distanzteiles (4).

9. Verschraubungskopf nach einem der vorhergehenden Ansprüche.
**dadurch gekennzeichnet, daß**
das Distanzteil (4) mit dem Verschraubungskopf durch einen ringförmig umlaufenden Hinterschnitt drehbar, jedoch unverlierbar verbunden ist.

10. Verschraubungskopf nach Anspruch 9,
**dadurch gekennzeichnet, daß**
der Hinterschnitt (9) spielbehaftet ist.

11. Verschraubungskopf nach Anspruch 9 oder 10.
**dadurch gekennzeichnet, daß**
der Hinterschnitt (9) durch Rollen des Verschraubungskopfes nach dem Ansetzen des Distanzteiles (4) hergestellt wird.

12. Verschraubungskopf nach einem der vorhergehenden Ansprüche.
**dadurch gekennzeichnet, daß**
die Durchgangsöffnung (12) des Distanzteiles (4) mit der Durchgangsöffnung (11) der den Verschraubungskopf bildenden Mutter (1) fluchtet.

13. Verschraubungskopf nach einem der vorhergehenden Ansprüche,
**dadurch gekennzeichnet, daß**
die Durchgangsöffnung (12) des Distanzteiles (4) größer ist als die Durchgangsöffnung (11) der den Verschraubungskopf bildenden Mutter (1) bzw. der Schraubenschaft (13) einer das Distanzteil (4) tragenden Schraube.

14. Verschraubungskopf nach einem der vorhergehenden Ansprüche.
**dadurch gekennzeichnet, daß**
die Durchgangsöffnung (12) des Distanzteiles (4) konisch ausgebildet ist und zu dem Verschraubungskopf (11) hin enger wird.

## Claims

1. Screwing head (nut (1) or screw head (2)),
**characterized in that**,
a tubular distance piece (4) is rotatably but captively arranged on the face (3) located on the screwing side.

2. Screwing head according to claim 1,
**characterized in that**
the axial extension of the distance piece (4) is larger than the axial extension of the screwing head (nut (1) or screw head (2)).

3. Screwing head according any one of the preceding claims,
**characterized in that**
the axial extension of the distance piece (4) is at least triple the axial extension of the screwing head.

4. Screwing head according any one of the preceding claims,
**characterized in that**
the distance piece (4) is flexibly formed in the longitudinal direction (10).

5. Screwing head according to claim 4,
**characterized in that**
the distance piece (4) in the longitudinal direction (10) is flexibly formed substantially or exclusively in the longitudinal direction (10).

6. Screwing head according to claim 4 or 5,
**characterized in that**
the distance piece (4) consists of plastic.

7. Screwing head according to claim 4,
**characterized in that**
the face (5) of the distance piece (4) on the component side is larger than the face of the distance piece (4) on the screwing side.

8. Screwing head according to claim 4,
**characterized in that**
the face (5) of the distance piece (4) on the component side is smaller than the face of the distance piece (4) on the screwing side.

9. Screwing head according to any one of the preceding claims,
**characterized in that**
the distance piece (4) is rotatably but captively connected with the screwing head through an annularly circular undercut.

10. Screwing head according to claim 9,
**characterized in that**
the undercut (9) has free motion.

11. Screwing head according to claim 9 or 10,
**characterized in that**
the undercut (9) is produced by rolling the screwing head after applying the distance piece (4).

12. Screwing head according to any one of the preceding claims,
**characterized in that**
the through hole (12) of the distance piece (4) is in alignment with the through hole (11) of the nut (1) forming the screwing head.

13. Screwing head according to any one of the preceding claims,
**characterized in that**
the through hole (12) of the distance piece (4) is larger than the through hole (11) of the nut (1) forming the screwing head or the screw shank (13) of a screw carrying the distance piece (4).

14. Screwing head according to any one of the preceding claims,
**characterized in that**
the through hole (12) of the distance piece (4) is conically formed and narrows towards the screwing head (11).

## Revendications

1. Tête de vissage (écrou (1) ou tête de vis (2)) **caractérisée en ce qu'**une pièce d'écartement tubulaire (4) s'applique de manière rotative mais inamovible contre la surface frontale (3) côté vissage.

2. Tête de vissage selon la revendication 1, **caractérisée en ce que** l'extension axiale de la pièce d'écartement (4) est plus grande que l'extension axiale de la tête de vis (écrou (1) ou tête de vis (2)).

3. Tête de vissage selon une ou plusieurs revendications précédentes, **caractérisée en ce que** l'extension axiale de la pièce d'écartement (4) est au moins le triple de l'extension axiale de la tête de visage.

4. Tête de vissage selon une ou plusieurs revendications précédentes, **caractérisée en ce que** la pièce d'écartement (4) est structurée élastique dans le sens longitudinal (10).

5. Tête de vissage selon la revendication 4, **caractérisée en ce que** la pièce d'écartement (4) est structurée élastique dans les sens longitudinal (10), respectivement sensiblement exclusivement dans le sens longitudinal (10).

6. Tête de vissage selon la revendication 4 ou 5, **caractérisée en ce que** la pièce d'écartement (4) se compose de matière plastique.

7. Tête de vissage selon la revendication 4, **caractérisée en ce que** la surface frontale (5) côté composant de la pièce d'écartement (4) est supérieure à la surface frontale de la pièce d'écartement (4) côté vissage.

8. Tête de vissage selon la revendication 4, **caractérisée en ce que** la surface frontale (5) de la pièce d'écartement (4) côté composant est plus petite que la surface frontale de la pièce d'écartement (4) côté vissage.

9. Tête de vissage selon l'une des revendications précédentes, **caractérisée en ce que** la pièce d'écartement (4) est reliée en rotation mais inamovible à la tête de vissage par une contre-découpe (9) annulaire circulaire.

10. Tête de vissage selon la revendication 9, **caractérisée en ce que** la contre-découpe (9) n'a pas de jeu.

11. Tête de vissage selon la revendication 9 ou 10, **caractérisée en ce que** la contre-découpe (9) est réalisée par roulement de la tête de vissage après l'application de la pièce d'écartement (4).

12. Tête de vissage selon l'une des revendications précédentes, **caractérisée en ce que** l'ouverture de passage (12) de la pièce d'écartement (4) est alignée avec l'ouverture de passage (11) de l'écrou (1) formant la tête de vissage.

13. Tête de vissage selon l'une des revendications précédentes, **caractérisée en ce que** l'ouverture de passage (12) de la pièce d'écartement (4) est supérieure à l'ouverture de passage (11) de l'écrou (1) formant la tête de vissage respective de la tige de vis (13) d'une vis portant la pièce d'écartement (4).

14. Tête de vissage selon l'une des revendications précédentes, **caractérisée en ce que** l'ouverture de passage (12) de la pièce d'écartement (4) est de forme conique et devient plus étroite en direction de la tête de vissage (11).
